# EUROPEAN PATENT APPLICATION

(11) **EP 4 769 594 A1**
(43) Date of publication of application: **01.07.2026**
(21) Application number: 25224331.6
(22) Date of filing: 17.12.2025
(51) Int. Cl.: H01M 10/04, H01M 10/0587, H01M 50/474, H01M 50/486, H01M 50/593

(54) **BATTERY CELL, BATTERY PACK, AND ELECTRONIC DEVICE**

(30) Priority: 27.12.2024 CN 202423275787 U
(71) Applicant: AESC Japan Ltd., Yokohama-shi, Kanagawa 220-0012 (JP)
(72) Inventor: ZHANG, Wenjing, Jiangyin City, Wuxi City, 214443 (CN)
(74) Representative: Becker, Eberhard

(57) **Abstract**

A battery cell (1), a battery pack (100), and an electronic device (1000) are provided. The battery cell (1) includes: a housing (10), including an end wall (11) and a side wall (12) surrounding the end wall (11), wherein the end wall (11) and the side wall (12) are enclosed to form an accommodating cavity (13); an electrode assembly (20), located in the accommodating cavity (13), wherein the electrode assembly (20) includes a positive electrode sheet (21), a separator (22), and a negative electrode sheet (23) stacked and wound to form a wound structure (201), the wound structure (201) includes a first end provided with a positive electrode tab (211) and a second end provided with a negative electrode tab along a height direction (H); and a first insulation film (40), encircling around an outer periphery of the wound structure (201) close to the first end.

## Description

### BACKGROUND

### Technical Field

The present disclosure relates to battery cells, and particularly relates to a battery cell, a battery pack, and an electronic device.

### Description of Related Art

In recent years, with the rapid development of electric vehicles, consumer electronics, and new energy storage systems, battery technology has emerged as a crucial factor influencing the advancement of electric vehicles.

In the development of battery technology, enhancing the safety performance of batteries is a critical technical issue that urgently requires resolution.

### SUMMARY

The technical problem to be solved by the present disclosure is to overcome the above technical problems of the related art and provide a battery cell, a battery pack, and an electronic device.

The present disclosure solves the above technical problems through the following technical solutions:
A battery cell includes: a housing, including an end wall and a side wall surrounding the end wall, wherein the end wall and the side wall are enclosed to form an accommodating cavity; an electrode assembly, located in the accommodating cavity, wherein the electrode assembly includes a positive electrode sheet, a separator, and a negative electrode sheet stacked and wound to form a wound structure, the wound structure includes a first end provided with a positive electrode tab and a second end provided with a negative electrode tab along a height direction, a direction from the second end to the first end is a preset direction; a first insulation film, encircling at least one turn around an outer periphery of the wound structure close to the first end, along the preset direction, the first insulation film includes a preset segment extending beyond an outer end surface of the positive electrode tab, the preset segment extends toward a direction close to the end wall, an included angle between the extending direction of the preset segment and the height direction ranges from 0 degrees to 60 degrees.

In this technical solution, by setting the included angle between the extending direction of the preset segment of the first insulation film and the height direction to range from 0 degrees to 60 degrees, that is to say, the preset segment is not bent but adhered to and covers a first current-collecting plate electrically connected with the positive electrode tab along a radial direction of the electrode assembly, it is possible to avoid the formation of folds capable of storing electrolyte when the first insulation film is adhered to and covers the first current-collecting plate. The electrolyte in the folds is likely to permeate through to the housing and cause corrosion to the housing. The above design improves the safety performance of the battery. Moreover, the first insulation film includes the preset segment extending beyond an outer surface of the positive electrode tab, and a material of the housing of large columnar batteries (similar to 4680/4695/46120/46150 and other columnar batteries) is steel, so that the housing has a higher strength. The steel housing is generally electrically connected to the negative electrode tab and carries negative charge, the design of the present disclosure allows an electrical insulation to be formed between the positive electrode tab and the housing, thereby increasing the safety performance of the battery.

Preferably, the battery cell further includes a first current-collecting plate located between the positive electrode tab and the end wall of the housing along the height direction, wherein the first current-collecting includes a terminal post connection portion and a positive electrode tab connection portion connected to each other, the positive electrode tab connection portion is electrically connected to the positive electrode tab, and the terminal post connection portion is electrically connected to a terminal post; the first insulation film includes a substrate and an adhesive layer disposed on a portion of a surface of the substrate, along the preset direction, the substrate includes a first region that extends beyond a side of the positive electrode tab connection portion away from the electrode assembly, and the first region is not covered with the adhesive layer; and/or, the battery cell further includes a first insulation sealing member located between the first current-collecting plate and the end wall along the height direction, along the preset direction, an edge of the first insulation film does not extend beyond a side of the first insulation sealing member away from the electrode assembly.

Preferably, along the preset direction, the substrate includes a second region covered with the adhesive layer and a third region not covered with the adhesive layer. The third region includes the first region, or the third region overlaps with the first region, wherein a width of the substrate along the height direction is set as W, a width of the second region along the height direction is set as w, and a value range of w/W is 0.12-0.8.

Preferably, the first insulation film is securely connected with the first insulation sealing member.

Preferably, the positive electrode tab is a flattened tab, and a flattened surface is formed on the positive electrode tab along the height direction. Along the preset direction, a distance that the first insulation film extends beyond the flattened surface is set as d, and a distance from an inner surface of the end wall to the flattened surface is set as D, and a value range of d/D is 0.1-0.99.

Preferably, the battery cell further includes a second insulation film surrounding the outer periphery of the wound structure and located between the first end and the second end along the height direction. Along a radial direction of the wound structure, orthogonal projections of the first insulation film and the second insulation film do not overlap each other; and/or, a material of a substrate of the second insulation film is PI or PET; and/or, a ratio of a thickness of the second insulation film to a thickness of the first insulation film is 0.8-1.1; and/or, a peel strength of the first insulation film is 2 times to 7 times a peel strength of the second insulation film.

Preferably, the second insulation film is continuously arranged along a circumferential direction of the wound structure without overlapping, and forms an uncovered region of the wound structure that is not covered by the second insulation film at the outer periphery of the wound structure. An orthogonal projection of an overlapping portion of the first insulation film along the circumferential direction of the wound structure in the height direction at least partially falls within the uncovered region of the wound structure.

Preferably, the battery cell is a columnar battery, and the battery cell further includes: a terminal post, passing through the end wall and electrically connected with the positive electrode tab through the first current-collecting plate, wherein the terminal post is provided with an electrolyte injection through hole along the height direction; and/or, the accommodating cavity of the housing is provided with an opening at an end away from the end wall, wherein the housing further includes a crimping portion formed at an end of the side wall close to the opening and recessed toward the interior of the housing; the battery cell further includes: a cover plate, disposed on the opening; a second insulation sealing member, surrounding a periphery of the cover plate to insulate and seal the cover plate and the housing; a second current-collecting plate, disposed between the electrode assembly and the cover plate, and electrically connected with the housing, wherein a connecting piece of the second current-collecting plate is located at a side of the crimping portion facing the electrode assembly and is welded to the crimping portion; and/or, a material of the substrate of the first insulation film is PI.

A battery pack includes the battery cell as described above.

An electronic device includes the battery pack as described above.

The positive progressive effects of the present disclosure lie in: in the present disclosure, by setting the included angle between the extending direction of the preset segment of the first insulation film and the height direction to range from 0 degrees to 60 degrees, that is to say, the preset segment is not bent but adhered to and covers the first current-collecting plate electrically connected with the positive electrode tab along the radial direction of the electrode assembly, it is possible to avoid the formation of folds capable of storing electrolyte when the first insulation film is adhered to and covers the first current-collecting plate. The electrolyte in the folds is likely to permeate through to the housing and cause corrosion to the housing. The above design improves the safety performance of the battery. Moreover, the first insulation film includes the preset segment extending beyond the outer surface of the positive electrode tab, and the material of the housing of large columnar batteries (similar to 4680/4695/46120/46150 and other columnar batteries) is steel, so that the housing has a higher strength. The steel housing is generally electrically connected to the negative electrode tab and carries negative charge, the design of the present disclosure allows the electrical insulation to be formed between the positive electrode tab and the housing, thereby increasing the safety performance of the battery.

The battery cell of the present disclosure further includes the terminal post. The terminal post is provided with the electrolyte injection through hole along the height direction. The electrolyte injection through hole is arranged corresponding to the first end of the electrode assembly. The electrolyte flows into the housing through the electrolyte injection through hole. Through the design of the specific structure where the included angle between the extending direction of the preset segment of the first insulation film at the first end and the height direction ranges from 0 degrees to 60 degrees, it is possible to effectively avoid the electrolyte injected into the electrolyte injection through hole from entering the space between the first insulation film and the housing, thereby improving the electrolyte wetting efficiency during injection of the positive electrode electrolyte.

### BRIEF DESCRIPTION OF THE DRAWINGS

FIG. 1 is a structural schematic diagram of a battery cell according to an embodiment of the present disclosure.
FIG. 2 is a cross-sectional diagram of a structure of a battery cell according to an embodiment of the present disclosure.
FIG. 3 is a partially enlarged structural diagram of a portion A in FIG. 2.
FIG. 4 is a partially enlarged structural diagram of a portion B in FIG. 2.
FIG. 5 is a partial structural diagram of another embodiment of a battery cell according to an embodiment of the present disclosure.
FIG. 6 is a partial structural diagram of still another embodiment of a battery cell according to an embodiment of the present disclosure.
FIG. 7 is a three-dimensional structural diagram of an electrode assembly of a battery cell according to a preferred embodiment of the present disclosure.
FIG. 8 is a cross-sectional structural diagram of an electrode assembly of a battery cell according to a preferred embodiment of the present disclosure.
FIG. 9 is a partial structural diagram of a first insulation film of a battery cell according to a preferred embodiment of the present disclosure when unfolded.
FIG. 10 is a structural diagram of a battery pack according to a preferred embodiment of the present disclosure.
FIG. 11 is a structural diagram of an electronic device according to a preferred embodiment of the present disclosure.

### DESCRIPTION OF THE EMBODIMENTS

The following exemplifies a preferred embodiment and combines with the accompanying drawings to more clearly and completely illustrate the present disclosure.

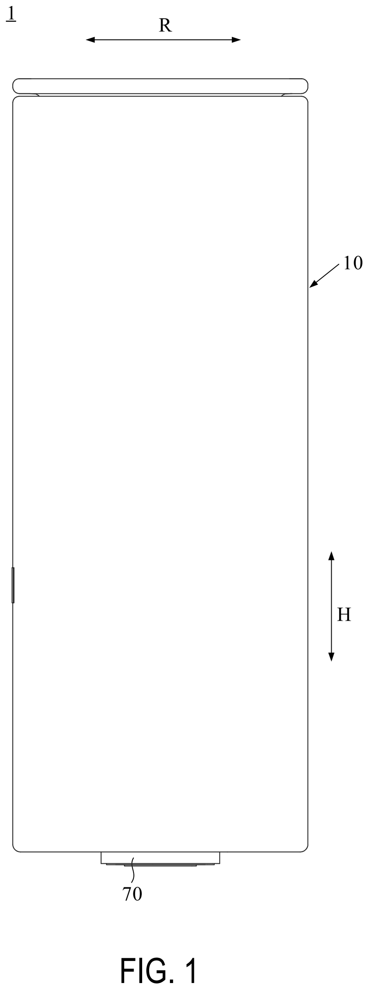

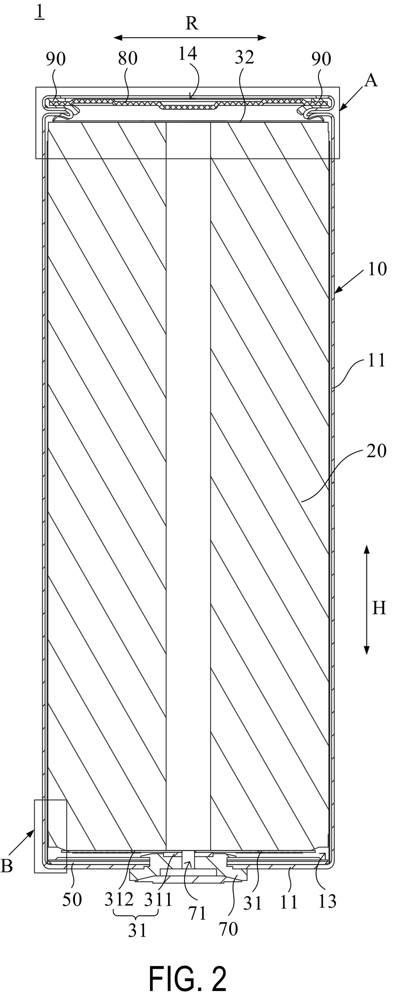

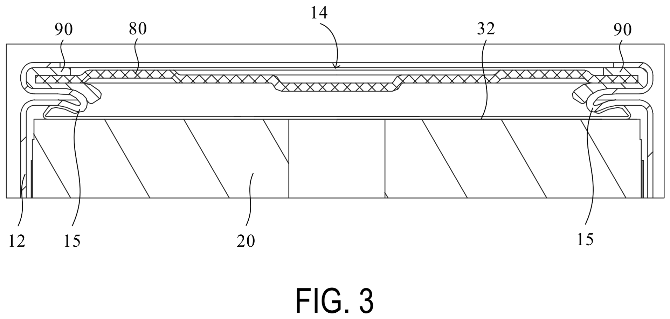

As shown in FIG. 1 to FIG. 6, this embodiment provides a battery cell 1. The battery cell 1 includes: a housing 10, an electrode assembly 20, and a first insulation film 40.

The housing 10 includes an end wall 11 and a side wall 12 surrounding the end wall 11. The end wall 11 and the side wall 12 are enclosed to form an accommodating cavity 13 for accommodating the electrode assembly 20, an electrolyte, and other necessary battery components. The connection between the end wall 11 and the side wall 12 may be implemented through various methods, for example, may be in the form of integral stamping molding, integral casting molding, or separate welding.

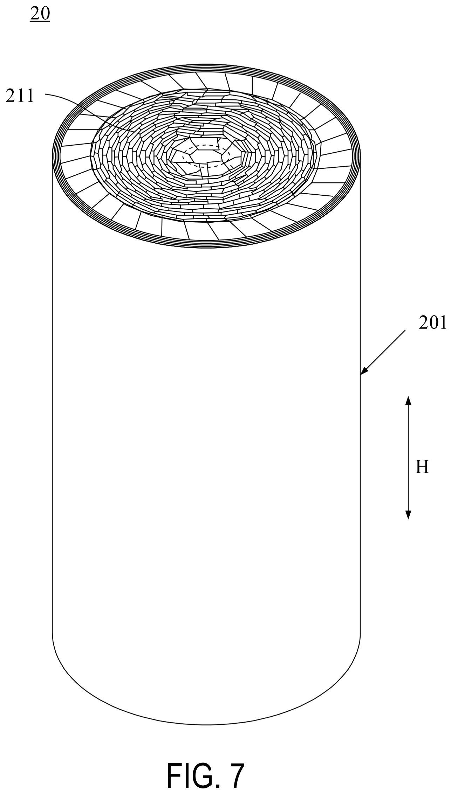

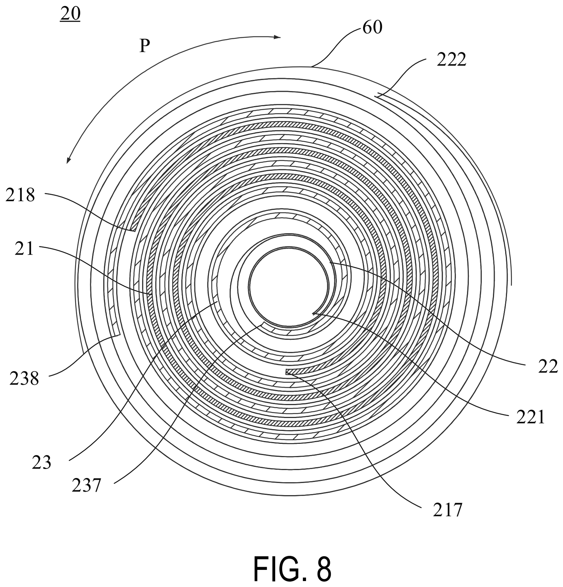

As shown in FIG. 7 and FIG. 8, the electrode assembly 20 is located in the accommodating cavity 13. The electrode assembly 20 includes a wound structure 201 formed by stacking and winding a positive electrode sheet 21, a separator 22, and a negative electrode sheet 23. The wound structure 201 includes a first end provided with a positive electrode tab 211 and a second end provided with a negative electrode tab along a height direction H. A direction from the second end to the first end is a preset direction Q.

The first insulation film 40 encircles at least one turn around an outer periphery of the wound structure 201 close to the first end. Along the preset direction Q, the first insulation film 40 includes a preset segment 401 extending beyond an outer end surface of the positive electrode tab 211. The preset segment 401 extends toward a direction close to the end wall 11. An included angle α between the extending direction of the preset segment 401 and the height direction H ranges from 0 degrees to 60 degrees.

In this way, by setting the included angle α between the extending direction of the preset segment 401 of the first insulation film 40 and the height direction H to range from 0 degrees to 60 degrees, that is to say, the preset segment 401 is not bent but adhered to and covers a first current-collecting plate 31 electrically connected with the positive electrode tab 211 along a radial direction R of the electrode assembly 20, it is possible to avoid the formation of folds capable of storing electrolyte when the first insulation film 40 is adhered to and covers the first current-collecting plate 31. The electrolyte in the folds is likely to permeate through to the housing 10 and cause corrosion to the housing 10. The above design improves the safety performance of the battery. Moreover, the first insulation film 40 includes the preset segment 401 extending beyond an outer surface of the positive electrode tab 211, and a material of the housing of large columnar batteries (similar to 4680/4695/46120/46150 and other columnar batteries) is steel, so that the housing has a higher strength. The steel housing is generally electrically connected to the negative electrode tab and carries negative charge, the design of the present disclosure allows an electrical insulation to be formed between the positive electrode tab 211 and the housing 10, thereby increasing the safety performance of the battery. The preset segment 401 extends beyond an outer end surface of the positive electrode tab 211 along the preset direction Q. The outer end surface refers to an outer end surface (highest point) of the positive electrode tab 211 along the preset direction Q.

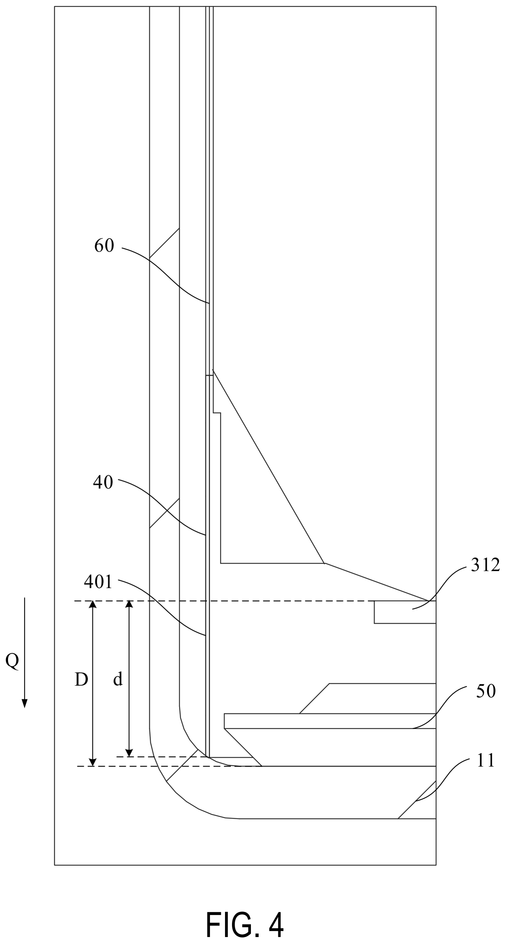

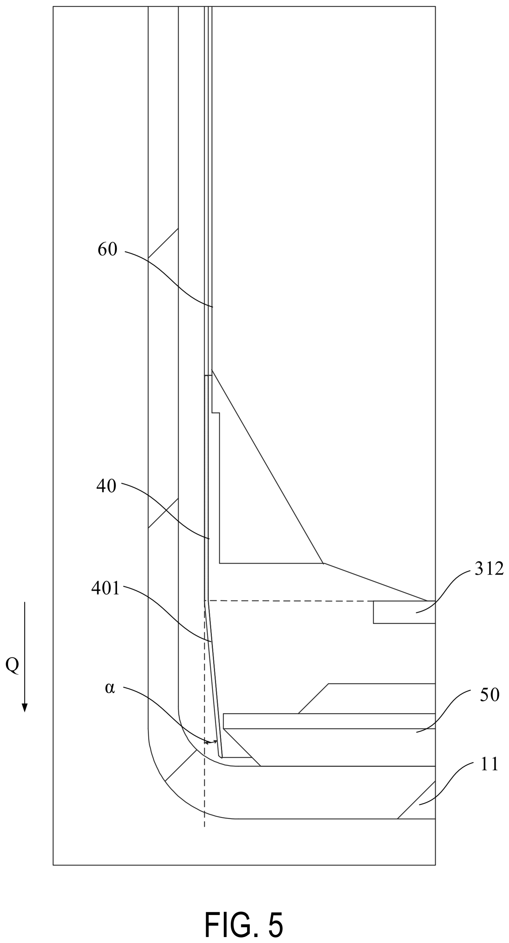

It should be noted that the included angle α between the extending direction of the preset segment 401 and the height direction H is an acute angle formed between the extending direction of the preset segment 401 and the height direction H, and a range of the acute angle is 0 degrees to 60 degrees. Please refer to FIG. 4 again. In an embodiment of this embodiment, when the included angle α between the extending direction of the preset segment 401 of the first insulation film 40 and the height direction H is 0 degrees, that is to say, the preset segment 401 under the circumstances is arranged along the height direction H. However, it is not limited thereto. Please refer to FIG. 5 again. In another embodiment of this embodiment, due to the placement of the first insulation film 40 or the placement of the battery, the first insulation film 40, which extends in the height direction H, may undergo slight bending or tilting, which results in the angle α between the extending direction of the preset segment 401 of the first insulation film 40 and the height direction H becoming 10 degrees, 15 degrees, 30 degrees, 40 degrees, 55 degrees, or an angle less than or equal to 60 degrees. In addition, the first insulation film 40 encircles at least one turn around the outer periphery of the wound structure 201 close to the first end, thereby forming an overlapping portion along the radial direction R along a circumferential direction P of the wound structure 201 by the first insulation film 40. Moreover, along the radial direction R of the wound structure 201, the first insulation film 40 is located between the electrode assembly 20 and the side wall 12 of the housing 10.

Preferably, the included angle α between the extending direction of the preset segment 401 of the first insulation film 40 and the height direction H ranges from 0 degrees to 30 degrees, that is, a portion of the first insulation film 40 that extends beyond the outer surface of the positive electrode tab 211 is parallel or substantially parallel to the height direction H of the electrode assembly 20. Such design may better avoid the first insulation film 40 from forming folds capable of storing the electrolyte when the first insulation film 40 is adhered to and covers the first current-collecting plate 31, thereby avoiding corrosion on the housing 10. Moreover, it is possible to better facilitate formation of an electrical insulation between the positive electrode tab 211 and the housing 10, increasing the safety performance of the battery.

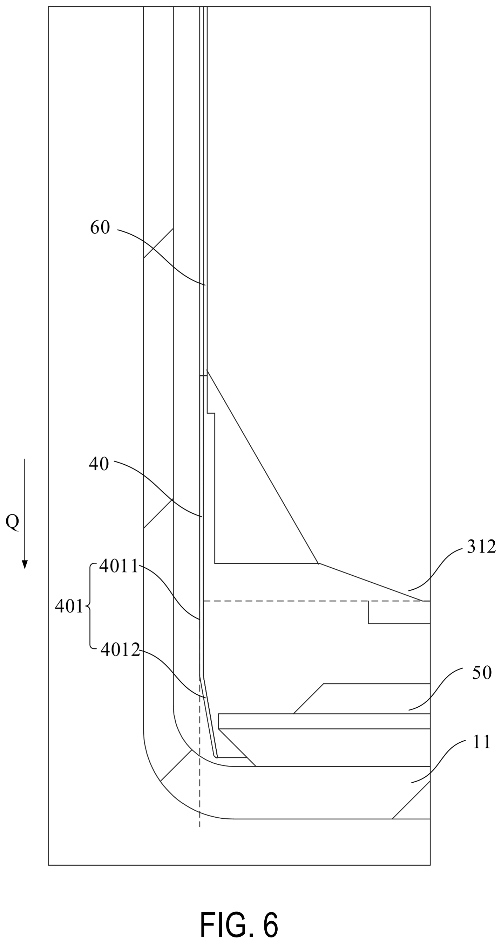

It should also be noted that when the preset segment 401 includes multiple segmental structures along the height direction H, the included angle α formed between the extending direction of the preset segment 401 and the height direction H refers to an included angle formed between an extending direction of a segment closest to the positive electrode tab 211 among the multiple segmental structures of the preset segment 401 and the height direction H. Please refer to FIG. 6 again. In yet another embodiment of this embodiment, the preset segment 401 includes a first segment 4011 close to the positive electrode tab 211 and a second segment 4012 away from the positive electrode tab 211. The included angle α formed between the extending direction of the preset segment 401 and the height direction H refers to an included angle formed between an extending direction of the first segment 4011 and the height direction H, and the included angle is 0 degrees.

The battery cell 1 further includes the first current-collecting plate 31. The first current-collecting plate 31 is located between the positive electrode tab 211 and the end wall 11 of the housing 10 along the height direction H. The first current-collecting plate 31 includes a terminal post connection portion 311 and a positive electrode tab connection portion 312 that are connected to each other. The positive electrode tab connection portion 312 is electrically connected to the positive electrode tab 211, and the terminal post connection portion 311 is electrically connected to a terminal post 70.

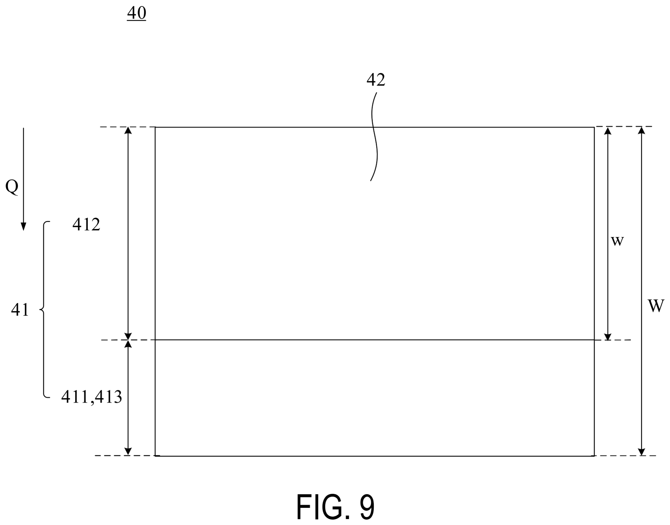

As shown in FIG. 9, specifically, the first insulation film 40 includes a substrate 41 and an adhesive layer 42 disposed on a portion of a surface of the substrate 41. Along the preset direction Q, the substrate 41 includes a first region 411 that extends beyond a side of the positive electrode tab connection portion 312 of the first current-collecting plate 31 that is away from the electrode assembly 20, and the first region 411 is not covered with the adhesive layer 42. The adhesive layer 42 covers a portion of a region of the substrate 41 facing the wound structure 201, so as to fix the first insulation film 40 on an outer periphery of the wound structure 201. By setting the first region 411 not covered with the adhesive layer 42, a value range of the angle α between the first region 411 and the height direction H may be optimized to be approximately close to 0 degrees. In this way, it is possible to prevent the adhesion of the first current-collecting plate 31 to the first region 411 during assembly, due to the presence of the adhesive layer 42, which may result in the formation of folds capable of storing the electrolyte on the surface of the first current-collecting plate 31, thereby causing corrosion of the housing.

Preferably, along the preset direction Q, the substrate 41 includes a second region 412 covered with the adhesive layer 42, and a third region 413 not covered with the adhesive layer 42, and the third region 413 overlaps with the first region 411. However, it is not limited thereto. In other embodiments, it may also be that the third region 413 includes the first region 411, which may be adjusted according to actual requirements.

A width of the substrate 41 along the height direction H is set as W, a width of the second region 412 along the height direction H is set as w, and the units of both w and W are mm, and the value range of w/W is 0.12-0.8, such as 0.12, 0.3, 0.46, 0.75, or 0.8, etc. By setting the range of w/W, on one hand, it is possible to avoid that the width of the second region 412 covered with the adhesive layer 42 is too small to fix the first insulation film 40 onto the outer periphery of the electrode assembly 20, and on the other hand, it is possible to avoid that the width of the second region 412 is too large, which causes folds to be formed easily and facilitate the accumulation of electrolyte, causing corrosion of the housing.

Specifically, the range of w is 3mm-6mm, such as 3mm, 4mm, 4.5mm, 5.8mm, or 6mm, etc.; the range of W is 7mm-13mm, such as 7mm, 8.5mm, 10mm, 11.8mm, or 13mm, etc. By setting the range of w, on one hand, it is possible to avoid that the width of the second region 412 covered with the adhesive layer 42 is too small to fix the first insulation film 40 onto the outer periphery of the electrode assembly 20; on the other hand, it is possible to avoid that the width of the second region 412 is too large, which causes folds to be formed easily and facilitate the accumulation of electrolyte, causing corrosion of the housing. By setting the range of W, on one hand, it is possible to avoid that the width of the substrate 41 is too small to serve the insulation function; on the other hand, it is also possible to avoid that the width of the substrate 41 is too large and affects the overall dimensions of the electrode assembly 20, thereby affecting the energy density of the battery.

A thickness of the substrate 41 is 40µm-65µm, such as 40µm, 48µm, 52.5µm, 60.8µm or 65µm, etc. By setting the thickness range of the substrate 41 to avoid the thickness of the substrate 41 being too thin, otherwise it would be difficult to obtain the required electrical insulation and support strength. Meanwhile, such design may avoid the thickness of the substrate 41 being too thick, otherwise the thickness of the overall structure would be took thick and affects the battery energy density.

In this embodiment, the positive electrode tab 211 is a flattened tab, and a flattened surface is formed on the positive electrode tab 211 along the height direction H. Along the preset direction Q, a distance that the first insulation film 40 extends beyond the flattened surface is set as d, and a distance from an inner surface of the end wall 11 to the flattened surface is set as D, and the units of d and D are both mm, and the value range of d/D is 0.1-0.99, such as 0.1, 0.3, 0.55, 0.8, or 0.99, etc. By setting the value range of d/D, on one hand, it is possible to avoid the distance that the first insulation film 40 extends beyond the flattened surface being too small to serve the insulation function; on the other hand, it is possible to avoid the distance that the first insulation film 40 extends beyond the flattened surface being too large, which may cause unnecessary folds due to contact with the housing 10 when the electrode assembly 20 and the housing 10 are assembled. Specifically, the distance d that the first insulation film 40 extends beyond the flattened surface is 1mm-5mm, such as 1mm, 2mm, 2.5mm, 3.8mm, or 5mm, etc.

The battery cell 1 further includes a first insulation sealing member 50, and the first insulation sealing member 50 is located between the first current-collecting plate 31 and the end wall 11 along the height direction H. By setting the first insulation sealing member 50, contact between the first current-collecting plate 31 and the end wall 11 that causes short circuit is avoided. Along the preset direction Q, an edge of the first insulation film 40 does not extend beyond a side of the first insulation sealing member 50 that is away from the electrode assembly 20, thereby avoiding the first insulation film 40 from abutting against the end wall 11 and causing unnecessary folds, which causes the first insulation film 40 to be subjected to a force in the width direction and contact the end wall 11 under assembly error conditions. In the meantime, the end wall 11 is generally welded with an external adapter piece. Under the circumstances, because the first insulation film 40 contacts the end wall 11, the first insulation film 40 is like to be subjected to heat and causes shrinkage, which affects the safety performance of the battery.

Preferably, the first insulation film 40 is securely connected with the first insulation sealing member 50, thereby forming a connected insulation structure at the outer periphery of the first end of the electrode assembly 20, thereby avoiding contact between the electrode assembly 20 and the end wall 11 and side wall 12 of the housing 10, realizing a better insulation effect, and improving the safety performance of the battery under working conditions such as vibration. Specifically, the first insulation film 40 and the first insulation sealing member 50 may be securely connected together through hot melt welding. Further, the first insulation film 40 surrounds the outer periphery of the first insulation sealing member 50 to form a closed loop structure, thereby forming an integral closed insulation structure at the outer periphery of the first end of the electrode assembly 20, thus better improving insulation and safety performance.

Further, the battery cell 1 also includes a second insulation film 60. The second insulation film 60 surrounds the outer periphery of the wound structure 201 and is located between the first end and the second end along the height direction H. Along the radial direction R of the wound structure 201, the orthographic projections of the first insulation film 40 and the second insulation film 60 do not overlap each other. That is, along the height direction H of the wound structure 201, some positions of the wound structure 201 are covered with the second insulation film 60, and the second insulation film 60 and the first insulation film 40 are arranged in a staggered manner to avoid stacking of the electrode assembly 20 along the radial direction R, which would affect the diameter of the electrode assembly 20, thereby improving energy density. Moreover, the second insulation film 60 serves to fix the outer separator 22 and prevent the separator 22 from becoming loose.

Please refer to FIG. 8, the positive electrode sheet 21 includes a positive electrode sheet start end 217 and a positive electrode sheet terminal end 218. The negative electrode sheet 23 includes a negative electrode sheet start end 237 and a negative electrode sheet terminal end 238. The separator 22 includes a separator start end 221 and a separator terminal end 222. The second insulation film 60 includes but is not limited to ending tape for fixing the separator terminal end 222. That is, the second insulation film 60 may be ending tape, or may be other insulation structure, such as a mylar film. Regardless of which structure the second insulation film 60 is, an orthogonal projection of the second insulation film 60 along the radial direction R of the wound structure 201 does not overlap with an orthogonal projection of the first insulation film 40.

A ratio of a thickness of the second insulation film 60 to a thickness of the first insulation film 40 is 0.8-1.1, such as 0.8, 0.85, 0.95, 1.0, or 1.1, etc. As described above, the preset segment 401 of the first insulation film 40 is parallel or substantially parallel to the height direction H of the electrode assembly 20. Compared to the preset segment 401 of the first insulation film 40 being bonded to the first current-collecting plate 31, by setting the first insulation film 40 through setting the range of the ratio of the thickness of the second insulation film 60 to the thickness of the first insulation film 40, the diameter of the electrode assembly 20 may be made more consistent, so that the energy density of the battery is improved, and the assembly is more precise.

Preferably, a material of the substrate of the first insulation film 40 is PI (full name: Polyimide). Since the first insulation film 40 is disposed at the position of the first end of the electrode assembly 20, and this position is an output end of the positive electrode, when welded with the first current-collecting plate 31, a relatively high temperature may be generated at this position, under the circumstances that the PI material has a relatively high heat resistance, by setting the material of the first insulation film 40 as PI, the insulation function may be further improved through the property of PI with a relatively high heat resistance. The adhesive layer of the first insulation film 40 includes polyacrylate.

The second insulation film 60 includes a substrate and an adhesive layer disposed on a portion of a surface of the substrate. A material of the substrate of the second insulation film 60 is PI (full name: Polyimide) or PET (full name: Polyethylene terephthalate). As described above, the main function of the second insulation film 60 is to fix the separator terminal end 222. Preferably, the material of the second insulation film 60 is PET, so as to achieve the advantageous technical effect of saving manufacturing cost while fixing the separator terminal end 222. An adhesive layer of the second insulation film 60 contains polyacrylate.

A peel strength of the first insulation film 40 is 2 times to 7 times the peel strength of the second insulation film 60, such as 2 times, 3.5 times, 4.5 times, 5.8 times, or 7 times, etc., that is, the peel strength of the first insulation film 40 is greater than the peel strength of the second insulation film 60. Since the wound structure 201 will expand and contract during the charge and discharge process, if a bonding force of the second insulation film 60 is too high, the expansion of the wound structure 201 will be constrained, which is unfavorable to the capacity performance of the battery cell; on the other hand, if the bonding force of the second insulation film 60 is too low, the wound structure 201 will not be able to be fixed, and the wound structure 201 will become loose. For the first insulation film 40, the first insulation film 40 needs to fix both the wound structure 201 and the positive electrode tab 211 simultaneously, requiring a greater bonding force to ensure that the wound structure 201 and the positive electrode tab 211 will not become loose, which is favorable for the first end of the wound structure 201 to enter the housing. Moreover, if the bonding force of the first insulation film 40 is small and the first insulation film 40 falls off, insulation failure will occur, causing a risk of the positive electrode tab 211 contacting the housing 10 and causing a short circuit. Therefore, by setting the peel strength of the first insulation film 40 to be 2 times to 7 times the peel strength of the second insulation film 60, the normal performance of the battery cell capacity may be ensured. Specifically, the peel strength of the first insulation film 40 is 2N/cm to 7N/cm; the peel strength of the second insulation film 60 is 1N/cm to 4N/cm.

Preferably, the second insulation film 60 is continuously arranged along the circumferential direction P of the wound structure 201 without overlapping, and forms an uncovered region of the wound structure 201 that is not covered by the second insulation film 60 at the outer periphery of the wound structure 201. An orthogonal projection of an overlapping portion of the first insulation film 40 along the circumferential direction P of the wound structure 201 in the height direction H at least partially falls within the uncovered region of the wound structure 201. By setting the orthogonal projection of the overlapping portion of the first insulation film 40 along the circumferential direction P of the wound structure 201 in the height direction H to at least partially fall within the uncovered region of the wound structure 201, it is possible to avoid overlapping of the overlapping portion of the first insulation film 40 along the circumferential direction P of the wound structure 201 with the second insulation film 60 in the radial direction R, which would affect the diameter of the battery cell, thereby improving energy density. Moreover, the first insulation film 40 can act as support for the uncovered region of the wound structure 201, and during battery use, it is possible to avoid significant differences in stress between the uncovered region of the wound structure 201 and the covered region of the wound structure 201 covered by the second insulation film 60, which would cause lithium precipitation after battery expansion.

Preferably, the second insulation film 60 and the first insulation film 40 are of an integral structure, so as to improve production efficiency while enabling reduction of the diameter of the battery cell, thereby ensuring the energy density of the battery.

In this embodiment, the battery cell 1 is a columnar battery. The columnar battery has advantages such as a high energy density, a long cycle life, and a good safety performance. Moreover, when the battery cell 1 is a columnar battery, because the housing 10 of the columnar battery is a steel housing, the housing 10 carries negative charge. Then, through the first insulation film 40 including the preset segment 401 extending beyond the outer surface of the positive electrode tab 211, the extending direction of the preset segment 401 and the height direction H have the included angle α with a range of 0 degrees to 60 degrees, which may make the positive electrode tab 211 and the housing 10 insulated. Furthermore, because the columnar battery is a full tab design, the first insulation film encircles at least one turn around the outer periphery of the wound structure 201 close to the first end. However, it is not limited thereto, in other embodiments, the battery cell 1 may also be a prismatic battery or other shaped batteries.

By applying the specific structure where the included angle α between the extending direction of the portion (preset segment 401) of the first insulation film 40 that extends beyond the outer surface of the positive electrode tab 211 and the height direction H ranges from 0 degrees to 60 degrees in this embodiment to columnar batteries, it is possible to avoid the first insulation film 40 from adhering to and covering the first current-collecting plate 31 and forming folds capable of storing electrolyte. The electrolyte in the folds may permeate through to the housing 10, causing corrosion to the housing 10, thereby improving the safety performance of the battery. Moreover, the first insulation film 40 includes the preset segment 401 that extends beyond the outer surface of the positive electrode tab 211, and the material of the housing of large columnar batteries (similar to 4680/4695/46120/46150 and other columnar batteries) is steel, which may have a higher strength. Steel housings are normally electrically connected to the negative electrode tab and carry negative charge. The design of this embodiment may make the positive electrode tab 211 and the housing 10 form electrical insulation, thus increasing the safety performance of the battery.

The battery cell 1 further includes: the terminal post 70. The terminal post 70 passes through the end wall 11, and is electrically connected with the positive electrode tab 211 through the first current-collecting plate 31. The terminal post 70 is provided with an electrolyte injection through hole 71 along the height direction H. The electrolyte injection through hole 71 is provided corresponding to the first end of the electrode assembly 20. The electrolyte flows into the housing 10 from the electrolyte injection through hole 71. Through the specific structure that the included angle α between the extending direction of the preset segment 401 of the first insulation film 40 disposed at the first end and the height direction H ranges from 0 degrees-60 degrees, it is possible to effectively avoid the electrolyte injected into the electrolyte injection through hole 71 from entering between the first insulation film 40 and the housing 10, thereby improving the electrolyte wetting efficiency during injection of the electrolyte of the positive electrode.

The accommodating cavity 13 of the housing 10 is provided with an opening 14 at one end away from the end wall 11. The housing 10 further includes a crimping portion 15. The crimping portion 15 is formed at an end of the side wall 12 close to the opening 14, and recesses toward the interior of the housing 10. The battery cell 1 further includes: a cover plate 80, a second insulation sealing member 90, and a second current-collecting plate 32. The cover plate 80 is disposed on the opening 14. The second insulation sealing member 90 surrounds a periphery of the cover plate 80, so as to make the cover plate 80 and the housing 10 insulated and sealed. The second current-collecting plate 32 is disposed between the electrode assembly 20 and the cover plate 80, and is electrically connected with the housing 10. A connecting piece of the second current-collecting plate 32 is located at a side of the crimping portion 15 facing the electrode assembly 20 and is welded and connected with the crimping portion 15. In this way, by setting the connecting piece of the second current-collecting plate 32 to be located at a side of the crimping portion 15 facing the electrode assembly 20 and welded and connected with the crimping portion 15, that is, a welding region of the second current-collecting plate 32 with the tab is located at a position closer to the electrode assembly 20 compared to the crimping portion 15, thereby enabling prevention of the influence of the crimping portion 15 on the welding region of the tab and the second current-collecting plate 32, and enabling improvement of the welding strength of the tab and the second current-collecting plate 32.

The sequence of welding the first current-collecting plate 31 and the second current-collecting plate 32 of the battery cell 1 with the electrode assembly 20 in this embodiment is as follows: first, the first current-collecting plate 31 is placed; then, the electrode assembly 20 is pressed on both the positive electrode and negative electrode together (the pressing process may increase the contact between the current-collecting plate and the electrode assembly 20, avoiding false welding); the first current-collecting plate 31 is welded, and linear welding is adopted instead of spot welding, this is because the negative electrode tab is relatively soft, after being pressed twice, the pressing would make the second current-collecting plate 32 and the electrode assembly 20 to be close to each other, adopting spot welding would cause concentrated heat and lead to burning the separator 22, using linear welding with small heat may avoid burning the separator 22 and causing contact short circuit between the positive and negative electrodes. Subsequently, the second current-collecting plate 32 is placed; the electrode assembly 20 is pressed on both the positive electrode and negative electrode together again; finally, the second current-collecting plate 32 is welded.

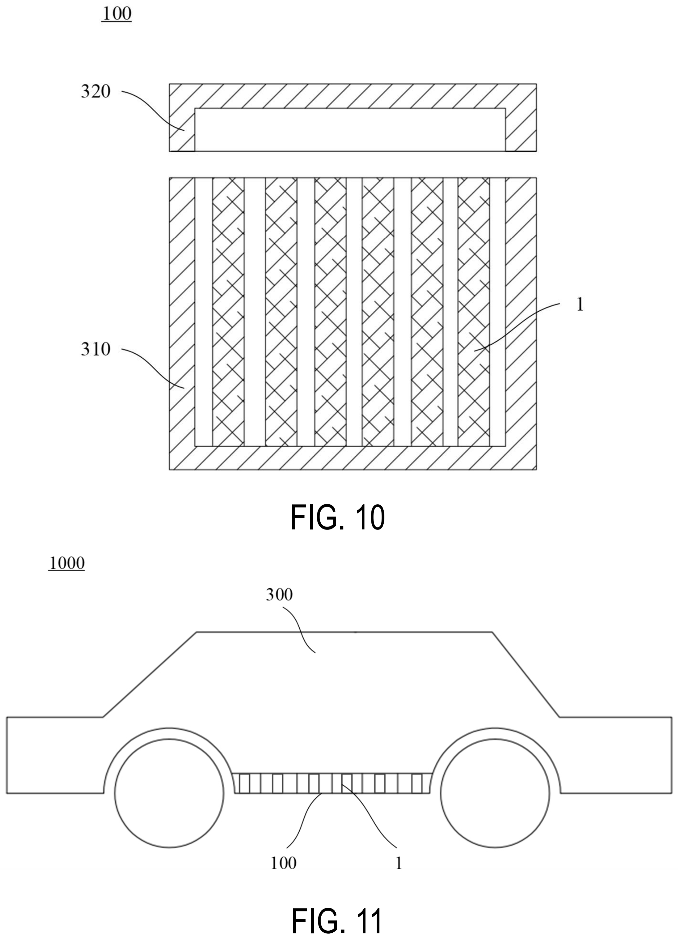

As shown in FIG. 10, the present disclosure further provides a battery pack 100. The battery pack 100 includes the battery cell 1. In an embodiment of the battery pack 100 of the present disclosure, the battery pack 100 includes a box body 310, a box cover 320, and multiple battery cells 1. The multiple battery cells 1 are placed in the box body 310 and are connected in series or in parallel with each other, or in a combination of series and parallel connections. The box cover 320 is sealed on the box body 310 to protect the multiple battery cells 1. It should be noted that, in addition to the battery cell 1 of the present disclosure, the battery pack 100 may also include portions such as a thermal management system for the battery pack 100, circuit boards, and the like. The battery pack 100 may be a battery module, a battery package, an energy storage cabinet, or the like; these will not be elaborated one by one herein.

As shown in FIG. 11, the present disclosure further provides an electronic device 1000, and the electronic device 1000 includes the battery pack 100. An operation portion 300 is electrically connected with the battery pack 100 to obtain electrical energy support. As an example, the electronic device 1000 is a vehicle, and the vehicle may be a fuel vehicle, a gas vehicle, or a new energy vehicle. The new energy vehicle may be a pure electric vehicle, a hybrid vehicle, or a range-extended vehicle, etc., but is not limited thereto. The operation portion 300 is a vehicle body, the battery pack 100 is disposed at a bottom of the vehicle body, and provides electrical energy support for operation of the vehicle or operation of electrical components in the vehicle. However, in some other embodiments, the electronic device 1000 may also be a mobile phone, a portable device, a laptop computer, a ship, a spacecraft, an electric toy, an electric tool, etc. The spacecraft includes aircraft, rockets, space shuttles, spaceships, etc. The operation portion 300 may be a unit component that is able to obtain electrical energy from the battery pack 100 and perform corresponding operation, for example, a blade rotation unit of a fan, a dust suction working unit of a vacuum cleaner, etc. The electric toy includes fixed or mobile electric toys, for example, game consoles, electric car toys, electric ship toys, electric airplane toys, etc. The electric tool includes metal cutting electric tools, grinding electric tools, assembly electric tools, and railway electric tools, for example, electric drills, electric grinders, electric wrenches, electric screwdrivers, electric hammers, impact drills, concrete vibrators, electric planers, etc. The embodiments of the present disclosure do not impose special restrictions on the electronic device 1000.

## Claims

1. A battery cell (1), comprising:
a housing (10), comprising an end wall (11) and a side wall (12) surrounding the end wall (11), wherein the end wall (11) and the side wall (12) are enclosed to form an accommodating cavity (13);
an electrode assembly (20), located in the accommodating cavity (13), wherein the electrode assembly (20) comprises a positive electrode sheet (21), a separator (22), and a negative electrode sheet (23) stacked and wound to form a wound structure (201), the wound structure (201) comprises a first end provided with a positive electrode tab (211) and a second end provided with a negative electrode tab along a height direction (H), a direction from the second end to the first end is a preset direction (Q); and
a first insulation film (40), encircling at least one turn around an outer periphery of the wound structure (201) close to the first end, wherein along the preset direction (Q), the first insulation film (40) comprises a preset segment (401) extending beyond an outer end surface of the positive electrode tab (211), the preset segment (401) extends toward a direction close to the end wall (11), an included angle (α) between the extending direction of the preset segment (401) and the height direction (H) ranges from 0 degrees to 60 degrees.

2. The battery cell (1) according to claim 1, wherein the battery cell (1) further comprises a first current-collecting plate (31), the first current-collecting plate (31) is located between the positive electrode tab (211) and the end wall (11) of the housing (10) along the height direction (H), the first current-collecting plate (31) comprises a terminal post connection portion (311) and a positive electrode tab connection portion (312) connected to each other, the positive electrode tab connection portion (312) is electrically connected to the positive electrode tab (211), and the terminal post connection portion (311) is electrically connected to a terminal post (70);
the first insulation film (40) comprises a substrate (41) and an adhesive layer (42) disposed on a portion of a surface of the substrate (41), along the preset direction (Q), the substrate (41) comprises a first region (411) that extends beyond a side of the positive electrode tab connection portion (312) away from the electrode assembly (20), and the first region (411) is not covered with the adhesive layer (42); and/or,
the battery cell (1) further comprises a first insulation sealing member (50), the first insulation sealing member (50) is located between the first current-collecting plate (31) and the end wall (11) along the height direction (H), along the preset direction (Q), an edge of the first insulation film (40) does not extend beyond a side of the first insulation sealing member (50) away from the electrode assembly (20).

3. The battery cell (1) according to claim 2, wherein along the preset direction (Q), the substrate (41) comprises a second region (412) covered with the adhesive layer (42) and a third region (413) not covered with the adhesive layer (42), the third region (413) comprises the first region (411), or the third region (413) overlaps with the first region (411);
a width of the substrate (41) along the height direction (H) is set as W, and a width of the second region (412) along the height direction (H) is set as w, units of both w and W are mm, and a value range of w/W is 0.12-0.8.

4. The battery cell (1) according to claim 2, wherein the first insulation film (40) is securely connected with the first insulation sealing member (50).

5. The battery cell (1) according to claim 1, wherein the positive electrode tab (211) is a flattened tab, and a flattened surface is formed on the positive electrode tab (211) along the height direction (H), along the preset direction (Q), a distance that the first insulation film (40) extends beyond the flattened surface is d, and a distance from an inner surface of the end wall (11) to the flattened surface is D, units of both d and D are mm, and a value range of d/D is 0.1-0.99.

6. The battery cell (1) according to claim 1, wherein the battery cell (1) further comprises a second insulation film (60), the second insulation film (60) surrounds the outer periphery of the wound structure (201), and is located between the first end and the second end along the height direction (H);
along a radial direction (R) of the wound structure (201), orthogonal projections of the first insulation film (40) and the second insulation film (60) do not overlap each other; and/or,
a material of a substrate (41) of the second insulation film (60) is PI or PET; and/or,
a ratio of a thickness of the second insulation film (60) to a thickness of the first insulation film (40) is 0.8-1.1; and/or,
a peel strength of the first insulation film (40) is 2 times to 7 times a peel strength of the second insulation film (60).

7. The battery cell (1) according to claim 6, wherein the second insulation film (60) is continuously arranged along a circumferential direction (P) of the wound structure (201) without overlapping, and forms an uncovered region of the wound structure (201) that is not covered by the second insulation film (60) at the outer periphery of the wound structure (201), an orthogonal projection of an overlapping portion of the first insulation film (40) along the circumferential direction (P) of the wound structure (201) in the height direction (H) at least partially falls within the uncovered region of the wound structure (201).

8. The battery cell (1) according to any one of claims 1-7, wherein the battery cell (1) is a columnar battery, and the battery cell (1) further comprising:
a terminal post (70), passing through the end wall (11), and electrically connected with the positive electrode tab (211) through the first current-collecting plate (31), wherein the terminal post (70) is provided with an electrolyte injection through hole (71) along the height direction (H);
and/or,
the accommodating cavity (13) of the housing (10) is provided with an opening (14) at an end away from the end wall (11), the housing (10) further comprises a crimping portion (15), the crimping portion (15) is formed at an end of the side wall (12) close to the opening (14), and is recessed toward an interior of the housing (10);
the battery cell (1) further comprising:
a cover plate (80), disposed on the opening (14);
a second insulation sealing member (90), surrounding a periphery of the cover plate (80) to insulate and seal the cover plate (80) and the housing (10); and
a second current-collecting plate (32), disposed between the electrode assembly (20) and the cover plate (80), and electrically connected with the housing (10), wherein a connecting piece of the second current-collecting plate (32) is located at a side of the crimping portion (15) facing the electrode assembly (20) and is welded to the crimping portion (15); and/or,
a material of the substrate (41) of the first insulation film (40) is PI.

9. A battery pack (100), comprising the battery cell (1) according to any one of claims 1-8.

10. An electronic device (1000), comprising the battery pack (100) according to claim 9.
